# EUROPÄISCHE PATENTSCHRIFT

(11) **EP 1 404 183 B1**
(45) Veröffentlichungstag und Bekanntmachung des Hinweises auf die Patenterteilung: **28.10.2009**
(21) Anmeldenummer: 02751028.8
(22) Anmeldetag: 14.06.2002
(51) Int. Cl.: A22C 13/00

(54) **CELLULOSEHALTIGE, FÜR DEN MITVERZEHR GEEIGNETE FOLIE**
CELLULOSE CONTAINING FILM, SUITABLE FOR CONSUMPTION
PELLICULE A CONSOMMER CONTENANT DE LA CELLULOSE

(30) Priorität: 22.06.2001 DE 10129539
(43) Veröffentlichungstag der Anmeldung: 07.04.2004
(73) Patentinhaber: Kalle GmbH, 65203 Wiesbaden (DE)
(72) Erfinder: GORD, Herbert, 55218 Ingelheim (DE); HAMMER, Klaus-Dieter, 55120 Mainz (DE); NEEFF, Rainer, 65203 Wiesbaden (DE); BERGHOF, Klaus, 07407 Rudolstadt (DE); EILERS, Markus, 49835 Wietmarschen-Lohne (DE); TAEGER, Eberhard, 07407 Weissbach (DE); BÜRGER, Horst, 07407 Rudolstadt (DE)
(74) Vertreter: Plate, Jürgen
(86) Internationale Anmeldenummer: PCT/EP2002/006556
(87) Internationale Veröffentlichungsnummer: WO 2003/000060

(56) Entgegenhaltungen:
- EP-A- 0 286 026
- EP-A- 0 878 133
- DE-A- 19 737 113
- GB-A- 1 086 604
- US-A- 6 106 763

## Beschreibung

Die Erfindung betrifft eine zum Mitverzehr geeignete Verpackungsfolie für Nahrungsmittel sowie ihre Verwendung.

Als Wurstdärme, die zum Mitverzehr geeignet oder bestimmt sind, wurden bisher vor allem Naturdärme (für Bockwürste vor allem Schafsaitlinge) und Kollagendärme eingesetzt. Bei einem eßbaren Kollagendarm vom Kaliber 21 bewegen sich die für die Kaubarkeit wichtigen mechanischen Eigenschaften in folgenden Bereichen:

| | |
|---|---|
| Reißfestigkeit in Längsrichtung im trockenen Zustand: | 20 bis 40 N/mm² |
| Reißfestigkeit in Längsrichtung im nassen Zustand: | 5 bis 10 N/mm² |
| Reißdehnung in Längsrichtung in trockenem Zustand: | 10 bis 30 % |
| Reißdehnung in Längsrichtung in nassem Zustand: | 10 bis 20 % |
| Platzdruck in nassem Zustand: | 18 bis 30 kPa |

Wichtig ist also, daß die Reißfestigkeit im nassen Zustand geringer ist als im trockenen.

Aufgrund von Tierseuchen, wie BSE, bestehen jedoch starke Vorbehalte gegen Natur- und Kollagendärme. Die als Ersatz entwickelten eßbaren Würstchenhüllen auf Basis von Calciumalginat (DE-C 12 13 211) haben sich jedoch als technisch unzulänglich erwiesen. Durch Wechselwirkung mit dem Brät und der Lake wird das schwer lösliche Calciumalginat allmählich in das leichter lösliche Natriumalginat umgewandelt. Dadurch verlieren die Hüllen an Stabilität. Eßbare Därme auf Basis anderer natürlicher Polymere, wie vernetztem Casein, haben ebenfalls keine Verbreitung gefunden.

Bekannt sind auch bioabbaubare, gegebenenfalls sogar eßbare Formkörper aus einem thermoplastischen Gemisch, das als wesentliche Bestandteile native oder modifizierte Stärke und Protein enthält (WO 93/19125). Stärke und Protein werden durch ein Vernetzungsmittel, wie Formaldehyd, Glutaraldehyd oder Epichlorhydrin, miteinander verbunden. Das thermoplastische Gemisch kann daneben auch noch Weichmacher, Gleitmittel, Füllstoffe, antimikrobiell wirksame Mittel und/oder Farbstoffe enthalten, wie Glycerin, Glycerin-mono-, -di- oder-triacetat, Sorbit, Mannit, Ethylenglykol, Polyvinylalkohol, Methylcellulose, Diethylcitrat, Fettsäuren, Pflanzenöl, Mineralöl oder mikrokristalline Cellulose. Aus dem Gemisch lassen sich durch Tiefziehen, Spritzgießen, Blasformen oder ein ähnliches Verfahren Formkörper, beispielsweise Folien, Kapseln, Schalen, Flaschen, Rohre, herstellen. Für schlauchförmige Nahrungsmittelhüllen, insbesondere kochfeste Wursthüllen, ist das thermoplastische Gemisch jedoch wenig geeignet, denn Stärke löst sich in heißem Wasser zumindest teilweise. Für eine eßbare Wursthülle ist das Material außerdem zu zäh.

Bekannt ist auch die Herstellung von Fasern aus Proteinen. Sie lassen sich durch Auflösen der Proteine und Verspinnen der dabei entstehenden Lösung direkt in ein Koagulationsbad (Naßspinnverfahren) oder in einen klimatisierten Fallschacht (Trockenspinnverfahren; s. CH 232 342) erhalten.

Großtechnische Bedeutung hatte in der Vergangenheit das sogenannte ^{®}Lanital-Verfahren zur Herstellung von Proteinfasern aus Casein (GB 483 731; FR 813 427; US 2 297 397; US 2 338 916). In diesem Verfahren wird Casein, das wiederum durch Säurefällung aus Milch gewonnen wird, in verdünnter Natronlauge gelöst. Die Lösung wird dann in ein schwefelsaures wäßriges Fällbad versponnen. Die dabei entstehenden Fasern oder Filamente werden anschließend in einem formaldehydhaltigen Bad gehärtet. Neben Casein lassen sich auch andere Proteine, beispielsweise Mais-, Erdnuß-, Sojabohnen-, Baumwollsamen- oder Fischproteine, als Rohstoff einsetzen. Zur Härtung der Protein-Formkörper nach der Koagulation werden die durch Streckung orientierten Polypeptidketten vernetzt und damit fixiert. Als Vernetzungsmittel eignen sich neben Formaldehyd auch andere Aldehyde oder Dialdehyde, daneben auch Formamid und Aluminiumsulfat.

Bekannt ist schließlich auch ein Verfahren zur Herstellung konzentrierter Lösungen von fibrillären Proteinen in NMMO-Monohydrat und die Verwendung der Lösung zur Herstellung von Formkörpern (DE-A 198 41 649). Die in der Natur in großer Zahl vorkommenden und häufig einfach gewinnbaren globulären Proteine sind dafür jedoch nicht einsetzbar.

Kunstdarm auf Basis von Cellulose wiederum ist nicht kaubar und daher nicht zum Mitverzehr geeignet. Er läßt sich allerdings nach neueren Verfahren, wie dem Aminoxidverfahren, anders als bei dem früher üblichen Viskoseverfahren einfach und umweltfreundlich herstellen. Beim Aminoxidverfahren wird die Cellulose in einem Aminoxid, insbesondere in N-Methyl-morpholin-N-oxid (NMMO), gelöst, ohne daß sie dabei chemisch modifiziertwird. Die Aminoxid/Cellulose-Lösung läßt sich auf bekannten Vorrichtungen, beispielsweise mit Hilfe von Ringschlitzdüsen, verspinnen. Nach Durchlaufen eines Luftspalts gelangtderextrudierte Formkörper in ein wäßriges Fällbad, in dem die Cellulose regeneriert wird. Solche Verfahren sind zahlreich beschrieben (US-A 4,246,221, DE-A 42 19 658, DE-A 42 44 609, DE-A 43 43 100, DE-A 44 26 966).

Die bisher als Ersatz für Natur- und Kollagendärme entwickelten Produkte haben die zu stellenden Anforderungen hinsichtlich der Kaubarkeit und/oder der toxikologischen Unbedenklichkeit nicht erfüllt. Die bisher bekannten Verfahren zur Verarbeitung von Proteinen sind zudem mit einer hohen Anzahl an Prozeßstufen verbunden, was technisch aufwendige und dementsprechend teure Anlagen erfordert.

Es bestand daher die Aufgabe, eine eßbare, d.h. eine zum Mitverzehr geeignete Verpackungsfolie für Nahrungsmittel zu schaffen, die physiologisch und toxikologisch unbedenklich, gut kaubar und dabei auch noch einfach und kostengünstig ohne große Umweltbelastung herstellbar ist. Die Rohstoffe dafür sollen einfach und preiswert verfügbar sein.

Überraschend wurde nunmehr gefunden, daß sich das Problem lösen läßt, wenn man eine Lösung von Cellulose in NMMO-Monohydrat mit Protein und Füllstoff versetzt. Es entsteht eine Mischung, die nach Extrusion und Regeneration zu einer eßbaren, d.h. in erster Linie kaubaren Folie führt. Die mechanische Eigenschaften der Folie unterscheiden sich überraschend deutlich von denen einer reinen Cellulosefolie. Die Ursache ist vermutlich eine Unterbrechung der Wechselwirkungen der gestreckten Cellulosemoleküle (β-glucosidische Bindung) durch den Einbau der Proteinmoleküle und der Füllstoffpartikel.

Gegenstand der vorliegenden Anmeldung ist demgemäß eine für den Mitverzehr geeignete Verpackungsfolie für Nahrungsmittel, die dadurch gekennzeichnet ist, daß sie Cellulose, mindestens ein Protein und mindestens einen Füllstoff enthält, wobei die Füllstoffe eine Partikelgröße von unter 100 µm haben und wie die Proteine die Struktur der Cellulose unterbrechen. Die Folie ist bevorzugt eine nahtlose Schlauchfolie, die als Wursthülle eingesetzt werden kann.

Für die Herstellung der erfindungsgemäßen Folie wird vorzugsweise eine Cellulose mit einem Polymerisationsgrad DP (bestimmt nach der Cuoxam-Methode, daher auch als Cuoxam-DP bezeichnet) von etwa 300 bis 700, bevorzugt von etwa 400 bis 650, eingesetzt. Als besonders günstig hat sich ein Sulfitzellstoff mit einem Cuoxam-DP von etwa 520 bis 600 erwiesen. Anders als bei dem bekannten Viskoseverfahren wird der DP der Cellulose beim NMMO-Verfahren praktisch nicht herabgesetzt. Der Anteil der Cellulose beträgt allgemein 20 bis 70 Gew.-%,-bevorzugt 30 bis 65 Gew.-%, jeweils bezogen auf das Trockengewicht der Folie.

Das Protein ist bevorzugt ein natürliches, globuläres Protein, insbesondere Casein (Milcheiweiß), Sojaprotein, Gluten (Weizenprotein), Zein (Maisprotein), Ardein (Erdnußprotein) oder Erbsenprotein. Prinzipiell geeignet ist jedes Protein, das zusammen mit der Cellulose in NMMO-Monohydrat löslich ist. Der Anteil des mindestens einen Proteins beträgt allgemein 5 bis 50 Gew.-%, bevorzugt 8 bis 45 Gew.-%, jeweils bezogen auf das Trockengewicht der Folie, d. h. das Gewicht der wasser- und glycerinfreien Folie.

Um die Wasserlöslichkeit des Proteins herabzusetzen oder aufzuheben, hat es sich als zweckmäßig erwiesen, das Protein vorher zu vernetzen. Das läßt sich beispielsweise erreichen durch Umsetzen des Proteins mit einem Aldehyd, Methylol, Epoxid und/oder Enzym. Die Begriffe "Aldehyd", "Methylol" usw. schließen dabei Verbindungen mit mehr als einer Carbaldehyd- bzw. Methylolgruppe ein. So sind Dimethylolethylenharnstoff und Dialdehyde, insbesondere Glyoxal, Malonaldehyd, Succinaldehyd und Glutaraldehyd, besonders geeignete Vernetzer. Die Vernetzung erfolgt üblicherweise in Gegenwart von Lewis-Säuren; die Temperatur bei der Umsetzung beträgt allgemein von 0 bis 160 °C. Bei der Vernetzung reagieren nicht nur die freien Aminogruppen und die etwa vorhandenen Säureamidgruppen des Proteins, sondern auch die Iminogruppen der Peptidbindungen und Hydroxygruppen des Serins. Ein vernetzend wirkendes Enzym ist beispielsweise Transglutaminase. Der Anteil an Vernetzer(n) ist abhängig von dessen Art. Allgemein beträgt er 0,5 bis 5,0 Gew.-%, bevorzugt 1,0 bis 3,0 Gew.-%, jeweils bezogen auf das Gewicht des Proteins.

Eine Vernetzung kann auch nachträglich erfolgen. Beispielsweise kann in der letzten Kufe zusammen mit dem sekundären Weichmacher - das ist allgemein Glycerin - ein toxikologisch unbedenkliches Vernetzungsmittel auf die Folie aufgebracht werden. Bevorzugte Vernetzungsmittel sind Citral, Tannin, Zuckerdialdehyd, Dialdehyd-Stärke, Karamel und epoxidiertes Leinöl. DieAuftragsmenge wird so gesteuert, daß die Folie anschließend etwa 0,5 bis 5 Gew.-%, bezogen auf ihr Trockengewicht, an Vernetzungsmittel enthält. Die eigentliche Vernetzung erfolgt dann beim nachfolgenden Trocknen und beim Lagern der Folie.

Die Füllstoffe sollen sich in der NMMO-Spinnlösung möglichst wenig lösen. In NMMO unlösliche Füllstoffe können bereits der Maische hinzugefügt werden, bevor Wasser unter vermindertem Druck abdestilliert wird. Füllstoffe, die eine gewisse Löslichkeit in NMMO aufweisen, werden zweckmäßig erst unmittelbar vor der Extrusion mit der Spinnlösung vermischt. Falls erforderlich, kann die Löslichkeit der Füllstoffe in NMMO-Monohydrat durch Vorvernetzung reduziert werden. Wie die Proteine unterbrechen die Füllstoffe die Struktur der Cellulose. Sie vermindern die Dehnbarkeit der Folie ohne ihre Festigkeit zu beeinträchtigen. Besonders geeignete organische Füllstoffe sind Kleie, insbesondere Weizenkleie, gemahlene Naturfasern, insbesondere gemahlene Flachs-, Hanf- oder Baumwollfasern, Baumwoll-Linters, Chitosan, Guarkernmehl, Johannisbrotkernmehl, oder mikrokristalline Cellulose. Anstelle der organischen Füllstoffe oder zusätzlich dazu können auch feinteilige anorganische Füllstoffe zum Einsatz kommen. Beispiele dafür sind gemahlenes Calciumcarbonat oder pulverförmiges SiO₂. Geeignete Füllstoffe haben eine Partikelgröße unter 100 µm, vorzugsweise zwischen 2 und 50 µm. Der Anteil an Füllstoff(en) beträgt allgemein 3 bis 60 Gew.-%, bevorzugt 4 bis 50 Gew.-%, jeweils bezogen auf das Trockengewicht der Folie. Um gut kaubar zu sein, darf die Folie nicht sehr naßfest und auch nicht sehr zäh sein. Durch den Zusatz von hydrophilen Additiven läßt sich die Kaubarkeit noch weiter verbessern. Die hydrophilen Additive sind in der NMMO-Spinnlösung ebenfalls löslich. Besonders geeignet sind Homopolysaccharide und Derivate davon (insbesondere Ester und Ether), wie Stärke, Stärkeacetat, Chitin, Chitosan oder Pektin; Heteropolysaccharide und Derivate davon, wie Carrageenan, Xanthan, Alginsäure und Alginate; schließlich auch toxikologisch unbedenkliche synthetische PolymereoderCopolymere, wie Polyvinylpyrrolidon, Polyvinylalkohol oder Polyethylenoxide. Der Anteil der hydrophilen Additive beträgt allgemein etwa 0,5 bis 15 Gew.-%, bevorzugt 1 bis 10 Gew.-%, jeweils bezogen auf das Gesamtgewicht der Folie.

Noch weiter modifiziert werden kann die Folie mit Hilfe von primären Weichmachern oder Gleitmitteln. Das sind beispielsweise Triglyceride, Wachse, wie Schellack, Kohlenwasserstoffe, wie eßbare Naturkautschuke, oder Paraffine.

Zweckmäßig enthält die Folie auch noch einen sekundären Weichmacher, insbesondere Glycerin. Der sekundäre Weichmacher wird, wie allgemein üblich, in einer Weichmacherkufe unmittelbar vor dem Trocknen der Folie zugesetzt.

Die erfindungsgemäße Folie zeigt naß eine Reißfestigkeit (in Längsrichtung) von 3 bis 12 N/mm², bevorzugt von 4 bis 8 N/mm². Im trockenen Zustand ist die Reißfestigkeit deutlich höher. Sie liegt dann bei etwa 15 bis 50 N/mm², bevorzugt 20 bis 45 N/mm². Die Reißdehnung in Längsrichtung beträgt im trockenen Zustand 12 bis 30 %, im nassen Zustand etwa 10 bis 20 %. Soll die Folie als Wursthülle verwendet werden, dann ist sie allgemein als nahtlose Schlauchfolie ausgeführt. Der Platzdruck der Schlauchfolie beträgt in der Regel etwa 15 bis 32 kPa.

Verfahren zur Herstellung von - nicht-eßbaren - Schlauchfolien mit Hilfe von NMMO/Wasser/Cellulose-Spinnlösungen, die gegebenenfalls auch modifizierende Zusätze in gelöster Form enthalten, sind dem Fachmann prinzipiell bekannt und beispielsweise in der WO 97/31970 beschrieben.

In dem Verfahren zur Herstellung der erfindungsgemäßen Hülle werden die Cellulose und das gegebenenfalls vorvernetzte Protein in wäßrigem NMMO gelöst, die Lösung mit dem Füllstoff vermischt und die dabei entstehende Suspension extrudiert. Zur Herstellung von nahtlosen Schlauchfolien wird die Suspension durch eine Ringdüse extrudiert. Die extrudierte Folie wird dann in ein Koagulationsbad (= Spinnbad) transportiert, das eine wäßrige NMMO-Lösung enthält (vorzugsweise eine etwa 15 gew.-%ige wäßrige NMMO-Lösung). Dabei ist jedoch zusätzlich zu beachten, daß die Folie im nassen Zustand mechanisch nur sehr gering belastbar ist. Die Vorrichtungen, die die Folie durch die einzelnen Herstellungsstufen (Spinnbäder, Waschkufen, Weichmacherkufe, Trockner usw.) bewegen, müssen daher besonders schonend arbeiten. Dazu ist es zweckmäßig, alle Umlenkwalzen in den einzelnen Bädern in feinsten Abstufungen getrennt regelbar auszuführen und den Transport noch zusätzlich zu unterstützen, beispielsweise durch Transportbänder oder hydraulische Tragrohre. Nach Durchlaufen des Spinnbads wird die Folie noch durch Waschbäder geführt, in denen Reste von NMMO entfernt werden. Zweckmäßig wird die Folie anschließend noch durch eine Weichmacherkufe geführt, die Plastifiziermittel (vorzugsweise Glycerin) enthält. Aufgrund der geringen Stabilität der nassen Schlauchfolie kann die übliche Trocknung im aufgeblasenen Zustand nicht unmittelbar folgen. Erstwenn der Wassergehalt im unaufgeblasenen Gelschlauch reduziert ist, erhöht sich die Stabilität so weit, daß die Endtrocknung im aufgeblasenen Zustand durchgeführt werden kann. Es hat sich daher als günstig erwiesen, die Schlauchfolie zunächst in unaufgeblasenem Zustand mit Heißluft vorzutrocknen. Die weitgehend entwässerte Schlauchfolie wird dann auf das vorgesehene Endkaliber aufgeblasen und mit Heißluft auf die vorbestimmte Endfeuchte getrocknet. Auf die Endtrocknung im aufgeblasenen Zustand kann nicht verzichtet werden. Durch die dabei erfolgende Längs- und Querverstreckung werden wesentliche Eigenschaften, wie Festigkeit und Kaliberkonstanz, erst eingestellt. Wenn sie den Trockner durchlaufen hat, wird die Schlauchfolie in der Regel aufgespult. Anschließend kann sie noch konfektioniert werden, beispielsweise durch Zuschneiden, Raffen oder ähnliches.

Im füllfertigen Zustand hat die erfindungsgemäße schlauchförmige Folie allgemein einen Feuchtigkeitsgehalt von 8 bis 20 Gew.-%, bevorzugt 10 bis 18 Gew.-%.

Verwendung findet die erfindungsgemäße schlauchförmige Folie vor allem als künstliche Wursthülle, insbesondere für Würstchen, Bratwürstchen und kleinkalibrige Brüh- sowie Kochwürste.

Die nachfolgenden Beispiele dienen zur Erläuterung der Erfindung. Prozente sind darin Gewichtsprozente, soweit nicht anders angegeben. In sämtlichen Beispielen ist der Holzzellstoff ein Sulfitzellstoff MoDo Dissolving der Fa. MoDo mit einem Cuoxam-DP von etwa 550 (Beispiele 1 bis 7) bzw. etwa 500 (Beispiel 8). Nach dem Endtrocknen hatten alle Hüllen das Kaliber 21.

### Beispiel 1

7,45 kg gemahlener Holzzellstoff wurde in 130 kg einer Lösung aus 60 % NMMO und 40 % Wasser angemaischt. Durch Zugabe von NaOH wurde ein pH-Wert von 11 eingestellt. Dieser Maische wurden 7,7 kg Feucht-Casein (40 % Trockensubstanz) zugesetzt. Das Feucht-Casein wurde erhalten durch Säurefällung aus thermisch vorbehandelter (d.h. auf mehr als 70 °C erhitzter) Magermilch. Zur Reduzierung der Wasserlöslichkeit wurde das Casein mit 3 % Glutaraldehyd, bezogen auf das Gewicht des Caseins, vorvernetzt. Als Stabilisator wurden zusätzlich 20 g Propylgallat zugesetzt (das Propylgallat verhindert eine Zersetzung des NMMO). Anschließend wurden 3,5 kg fein gemahlene Weizenkleie mit einer Partikelgröße von 40 bis 60 µm in die Maische eingerührt.

Unter Heizen und Rühren wurde dann bei einem Druck von 25 mbar bei steigender Temperatur Wasser abdestilliert, bis das Lösemittel aus etwa 87 % NMMO und 13 % Wasser bestand (entspricht dem NMMO-Monohydrat). Die Lösung wies dann einen Brechungsindex von 1,4887 auf und eine Nullscherviskosität von 2.910 Pa·s bei 85°C.

Die so hergestellte Spinnlösung wurde bei einer Temperatur von 90 °C durch eine Ringspaltdüse mit einem Ringdurchmesser von 20 mm extrudiert. Der Folienschlauch passierte zunächst eine Luftstrecke von 10 cm Länge. Dabei wurde er faltenfrei gehalten durch sogenannte Stützluft, die in das Innere des Folienschlauches eingebracht wurde. In das Schlauchinnere wurde daneben als Innenfällbad eine laufend erneuerte, auf 5 °C temperierte, 15 %ige wäßrige NMMO-Lösung eingebracht. Das Außenfällbad bestand aus einer wäßrigen NMMO-Lösung der gleichen Zusammensetzung und Temperatur. Der Schlauch durchlief dann eine Fällbadstrecke von 3 m, wobei er nach Durchlaufen der halben Distanz umgelenkt wurde. Beim Verlassen der Spinnkufe war der Schlauch so weit querverstreckt, daß seine Flachbreite 30 mm betrug.

Anschließend passierte der Schlauch 4 Waschkufen mit je 8 Umlenkwalzen oben und unten, einer Badtiefe von 2,5 m und einer Luftstrecke von 0,5 m. Am Ende der letzten Kufe wurde Wasser eingeleitet, das im Gegenstrom geführt wurde. Am Ausgang der 1. Kufe wurde der NMMO-Gehalt auf diese Weise bei 12 bis 16 % gehalten. Die Temperatur stieg von einer Kufe zur nächsten bis auf 60 bis 70°C in der letzten Kufe. Zum Schluß wurde der Schlauch durch eine Weichmacherkufe geführt, die eine auf 60 °C temperierte, 10 %ige wäßrige Glycerinlösung enthielt. Beim Verlassen der Glycerinkufe betrug die Flachbreite des Schlauches noch 20 mm. Der Schlauch wurde dann in einem Düsentrockner im nicht aufgeblasenen Zustand waagerecht schwebend vorgetrocknet. Anschließend wurde er zwischen 2 Quetschwalzenpaaren im aufgeblasenen Zustand mit Heißluft getrocknet. Der Trockner wies mehrere Zonen mit abnehmender Temperatur auf. Die Zone am Eingang des Trockners hatte dabei eine Temperatur von 120°C, die am Ausgang von 80 °C. Nach Durchlaufen des Trockners wurde der Folienschlauch auf einen Wassergehalt von 8 bis 12 %, bezogen auf das Gesamtgewicht des Schlauches, angefeuchtet. Die mechanischen Eigenschaften des Schlauches sind in der nachfolgenden Tabelle zusammengestellt.

Der Schlauch wurde anschließend weiter angefeuchtet, bis er einen Wasseranteil von 16 bis 18 %, bezogen auf sein Gesamtgewicht, aufwies und dann zu Raupen gerafft. Die Raupen wurden auf einer automatischen Füllmaschine (^{®}FrankAMatic) mit Würstchenbrät gefüllt, gebrüht und geräuchert. Die Hülle war gut kaubar und zerkleinerbar.

### Beispiel 2

Beispiel 1 wurde wiederholt mit der Abweichung, daß die Weichmacherkufe nunmehr neben Glycerin auch noch ein Vernetzungsmittel (Dialdehyd-Stärke) enthielt. Die Vernetzung fand während des Trocknens statt. Die anschließende Konfektionierung und Verarbeitung erfolgte wie im Beispiel 1 beschrieben.

### Beispiel 3

7,45 kg gemahlener Holzzellstoff wurde in 130 kg einer 60 %igen wäßrigen NMMO-Lösung angemaischt. Durch Zugabe von NaOH wurde ein pH-Wert von 11 eingestellt. Dieser Maische wurden 3,3 kg an handelsüblichem Zein zugegeben. Als Stabilisator wurden zusätzlich 20 g Propylgallat zugesetzt. Anschließend wurden 5,3 kg feingemahlene Weizenkleie mit der Maische vermischt.

Die weiteren Verfahrensschritte waren wie im Beispiel 1 beschrieben.

### Beispiel 4

5,3 kg gemahlener Holzzellstoffwurden in 130 kg einer 60%igen wäßrigen NMMO-Lösung angemaischt. Durch Zugabe von NaOH wurde ein pH-Wert von 11 eingestellt. Zu dieser Maische wurden dann 2,2 kg an handelsüblichem Zein zugegeben. Als Füllstoff wurden 3 kg fein gemahlene Weizenkleie in die Maische eingerührt. Als Stabilisator wurden zusätzlich 20 g Propylgallat hinzugefügt.

Unter Heizen und Rühren wurden dann bei einem Druck von 25 mbar mit steigender Temperatur Wasser abdestilliert bis das Lösemittel zu 87 % aus NMMO bestand (entspricht dem NMMO-Monohydrat). Die Lösung wies einen Brechungsindex von 1,4850 und eine Nullscherviskosität von 1.090 Pa·s bei 85 °C auf.

Die weiteren Schritte zur Herstellung des Folienschlauchs waren wie im Beispiel 1.

### Beispiel 5

6,3 kg gemahlener Holzzellstoff wurden in 130 kg einer 60 %igen wäßrigen NMMO-Lösung angemaischt. Durch Zugabe von NaOH wurde ein pH-Wert von 11 eingestellt. Dieser Maische wurden 2,2 kg an handelsüblichem Zein zugesetzt. Als Füllstoff wurden 2,0 kg Baumwoll-Kurzfasern, die mit Citronensäure vorvernetzt waren, zugegeben. Darüber hinaus wurden 20 g Propylgallat als Stabilisator hinzugefügt.

Unter Heizen und Rühren wurde dann bei einem Druck von 25 mbar mit steigender Temperatur Wasser abdestilliert bis der Anteil an NMMO im Lösemittel bei 87 % lag (entspricht dem NMMO-Monohydrat). Die Lösung wies einen Brechungsindex von 1.4840 und eine Nullscherviskosität von 1.450 Pa·s bei 85°C auf.

Das Verspinnen, Waschen, Trocknen, Konfektionieren und Verarbeiten erfolgte wiederum wie im Beispiel 1 beschrieben.

### Beispiel 6

6,3 kg gemahlener Holzzellstoff wurden in 130 kg einer 60 %igen wäßrigen NMMO-Lösung angemaischt. Durch Zugabe von NaOH wurde ein pH-Wert von 11 eingestellt. Dieser Maische wurden 2,2 kg an handelsüblichem Zein zugesetzt. Als Füllstoffe wurden jeweils 1 kg an Baumwoll-Kurzfasem und an gemahlener Weizenkleie in die Maische eingerührt. Als Stabilisator wurden zusätzlich 20 g Propylgallat zugegeben.

Unter Heizen und Rühren wurde dann bei einem Druck von 25 mbar bei steigender Temperatur Wasser abdestilliert bis der Anteil an NMMO im Lösemittel bei 87 % lag. Die Lösung wies einen Brechungsindex von 1,4860 und eine Nullscherviskosität von 1.520 Pa·s bei 85°C auf.

Das Verspinnen, Waschen, Trocknen, Konfektionieren und Verarbeiten erfolgte wie im Beispiel 1 beschrieben.

### Beispiel 7

6,3 kg gemahlener Holzzellstoff wurden in 130 kg einer 60 %igen wäßrigen NMMO-Lösung angemaischt. Durch Zugabe von NaOH wurde der pH-Wert auf 11 eingestellt. Der Maische wurden dann 3,8 kg an handelsüblichem Ardein (= Erdnuß-Protein) zugegeben. Zusätzlich wurden 1,0 kg fein gemahlene Weizenkleie und 0,5 kg native Kartoffelstärke zugemischt. Als Stabilisator wurden zusätzlich 20 g Propylgallat zugesetzt.

Unter Heizen und Rühren wurde dann bei einem Druck von 25 mbar bei steigender Temperatur Wasser abdestilliert bis der Anteil an NMMO im Lösemittel bei 87 % lag. Die Lösung wies einen Brechungsindex von 1.4870 und eine Nullscherviskosität von 1.830 Pa·s bei 85 °C auf.

Das Verspinnen, Waschen, Trocknen, Konfektionieren und Verarbeiten erfolgte wie im Beispiel 1 beschrieben.

### Beispiel 8

5,1 kg gemahlener Holzzellstoff wurde in 136 kg einer 60 %igen wäßrigen NMMO-Lösung angemaischt. Durch Zugabe von NaOH wurde dann ein pH-Wert von 11 eingestellt. Zu dieser Maische wurden dann 1,3 kg Trockencasein gegeben. Zur Reduzierung der Wasserlöslichkeit war das Casein mit Hilfe von 0,03 % Transglutaminase und 4 % Glutaraldehyd, jeweils bezogen auf das Gewicht des Caseins, vorvernetzt worden. Als Füllstoff wurden 6 kg fein gemahlene Weizenkleie in die Maische eingerührt. Zusätzlich wurden 20 g Propylgallat als Stabilisator hinzugefügt.

Unter Heizen und Rühren wurde dann bei einem Druck von 25 mbar mit steigender Temperatur Wasser abdestilliert, bis der NMMO-Anteil im Lösemittel 87 % betrug (entspricht dem NMMO-Monohydrat). Die Lösung wies einen Brechungsindex von 1,4883 und eine Nullscherviskosität von 1.300 Pa·s bei 85 °C auf. Das Verspinnen, Waschen, Trocknen, Konfektionieren und Verarbeiten erfolgte dann wie im Beispiel 1 beschrieben.

**Tabelle**

| **Beispiel** | **Reißfestigkeit / längs** | | **Dehnung / längs** | |
|---|---|---|---|---|
| | **[N/mm²]** | | **[%]** | |
| | **trocken** | **naß** | **trocken** | **naß** |
| Vergleich* Kollagen | 31 | 6 | 13 | 16 |
| 1 | 15 | 4 | 20 | 12 |
| 2 | 17 | 6 | 18 | 18 |
| 2 | 16 | 7 | 22 | 20 |
| 4 | 15 | 4 | 13 | 9 |
| 5 | 22 | 8 | 18 | 15 |
| 6 | 33 | 7 | 15 | 14 |
| 7 | 15 | 4 | 19 | 18 |
| 8 | 16 | 7 | 21 | 14 |

## Patentansprüche

1. Für den Mitverzehr geeignete Verpackungsfolie für Nahrungsmittel, **dadurch gekennzeichnet, daß** sie Cellulose, mindestens ein Protein und mindestens einen Füllstoff enthält, wobei die Füllstoffe eine Partikelgröße von unter 100 µm haben und wie die Proteine die Struktur der Cellulose unterbrechen.

2. Verpackungsfolie gemäß Anspruch 1, **dadurch gekennzeichnet, daß** die Cellulose einen Polymerisationsgrad DP, bestimmt nach der Cuoxam-Methode, von etwa 300 bis 700, bevorzugt von etwa 400 bis 650, aufweist.

3. Verpackungsfolie gemäß Anspruch 1 oder 2, **dadurch gekennzeichnet, daß** der Anteil an Cellulose 20 bis 70 Gew.-%, bevorzugt 30 bis 65 Gew.%, beträgt, jeweils bezogen das Trockengewicht der Folie.

4. Verpackungsfolie gemäß einem oder mehreren der Ansprüche 1 bis 3, **dadurch gekennzeichnet, daß** das Protein ein natürliches" globuläres Protein, bevorzugt Casein, Sojaprotein, Gluten, Zein, Ardein oder Erbsenprotein, ist.

5. Verpackungsfolie gemäß einem oder mehreren der Ansprüche 1 bis 4, **dadurch gekennzeichnet, daß** der Anteil des mindestens einen Proteins 5 bis 50 Gew.-%, bevorzugt 8 bis 45 Gew.-%, beträgt, jeweils bezogen auf das Trockengewicht der Folie.

6. Verpackungsfolie gemäß einem oder mehreren der Ansprüche 1 bis 5, **dadurch gekennzeichnet, daß** das Protein vorvernetzt ist,

7. Verpackungsfolie gemäß Anspruch 6, **dadurch gekennzeichnet, daß** die Vorvernetzung des Proteins durch Umsetzen mit einem Aldehyd, Methylol, Epoxid und/oder Enzym erfolgt.

8. Verpackungsfolie gemäß Anspruch 7, **dadurch gekennzeichnet, daß** der Anteil an Vernetzer(n) 0,5 bis 5,0 Gew.-%, bevorzugt 1,0 bis 3,0 Gew.-%, beträgt, jeweils bezogen auf das Gewicht des Proteins.

9. Verpackungsfolie gemäß einem oder mehreren der Ansprüche 1 bis 8, **dadurch gekennzeichnet, das** der Füllstoffe ein organischer Füllstoff ist, bevorzugt Kleie, gemahlene Naturfasern, Baumwoll-Linters, Chitosan, Guarkernmehl, Johannisbrotkernmehl oder mikrokristalline Cellulose.

10. Verpackungsfolie gemäß einem oder mehreren der Ansprüche 1 bis 8, **dadurch gekennzeichnet, daß** der Füllstoff ein anorganischer Füllstoff ist, bevorzugt gemahlenes Calciumcarbonat oder pulverförmiges SiO₂.

11. Verpackungsfolie gemäß einem oder mehreren der Ansprüche 1 bis 10, **dadurch gekennzeichnet, daß** der Anteil an Füllstoff(en) 3 bis 60 Gew.-%, bevorzugt 4 bis 50 Gew.-%, beträgt, jeweils bezogen auf das Trockengewicht der Folie.

12. Verpackungsfolie gemäß einem oder mehreren der Ansprüche 1 bis 11, **dadurch gekennzeichnet, daß** sie ein hydrophiles Additiv enthält, das in der Spinnlösung löslich ist,

13. Verpackungsfolie gemäß Anspruch 12, **dadurch gekennzeichnet, daß** das hydrophile Additiv ein Homopolysaccharid oder ein Derivat davon, bevorzugt Stärke, Stärkeacetat, Chitin, Chitosan oder Pektin, ein Heteropolysaccharid oder ein Derivat davon, bevorzugt Carrageenan, Xanthan, Alginsäure oder Alginate, ein toxikologisch unbedenkliches synthetische Polymer oder Copolymer, bevorzugt Polyvinylpyrrolidon, Polyvinylalkohol oder ein Polyethylenoxid, ist.

14. Verpackungsfolie gemäß Anspruch 12 oder 13, **dadurch gekennzeichnet, daß** der Anteil an hydrophilen Additiv(en) 0,5 bis 15 Gew.-%, bevorzugt 1 bis 10 Gew.-%, beträgt, jeweils bezogen auf das Trockengewicht der Folie.

15. Verpackungsfolie gemäß einem oder mehreren der Ansprüche 1 bis 14, **dadurch gekennzeichnet, daß** sie einen primären Weichmacher und/oder ein Gleitmittel enthält..

16. Verpackungsfolie gemäß einem oder mehrere der Ansprüche 1 bis 15, **dadurch gekennzeichnet, daß** sie die Form eines nahtlosen Schlauches hat,

17. Verwendung der Verpackungsfolie gemäß einem oder mehreren der Ansprüche 1 bis 16 als künstliche Wursthülle, bevorzugt für Würstchen, Bratwürstchen und kleinkalibrige Brüh- und Kochwürste.

## Claims

1. A packaging film for food which is suitable for co-consumption, and which comprises cellulose, at least one protein and at least one filler, the fillers having a particle size of less than 100 µm and, like the proteins, interrupting the cellulose structure.

2. The packaging film as claimed in claim 1, wherein the cellulose has a degree of polymerization DP, determined by the cuoxam method, of from about 300 to 700, preferably from about 400 to 650.

3. The packaging film as claimed in claim 1 or 2, wherein the cellulose content is from 20 to 70 % by weight, preferably from 30 to 65 % by weight, in each case based on the dry weight of the film.

4. The packaging film as claimed in one or more of claims 1 to 3, wherein the protein is a natural globular protein, preferably casein, soybean protein, gluten, zein, ardein or pea protein.

5. The packaging film as claimed in one or more of claims 1 to 4, wherein the content of the at least one protein is from 5 to 50 % by weight, preferably from 8 to 45 % by weight, in each case based on the dry weight of the film.

6. The packaging film as claimed in one or more of claims 1 to 5, wherein the protein is preliminarily crosslinked.

7. The packaging film as claimed in claim 6, wherein the preliminary crosslinking of the protein is performed by redaction with an aldehyde, methylol, epoxide and/or enzyme.

8. The packaging film as claimed in claim 7, wherein the content of crosslinker(s) is from 0.5 to 5.0 % by weight, preferably from 1.0 to 3.0 % by weight, in each case based on the weight of the protein.

9. The packaging film as claimed in one or more of claims 1 to 8, wherein the filler is an organic filler, preferably bran, ground natural fibers, cotton linters, chitosan, guar seed meal, carob bean meal or microcrystalline cellulose.

10. The packaging film as claimed in one or more of claims 1 to 8, wherein the filler is an inorganic filler, preferably ground calcium carbonate or pulverulent SiO₂.

11. The packaging film as claimed in one or more of claims 1 to 10, wherein the content of filler(s) is from 3 to 60 % by weight, preferably from 4 to 50 % by weight, in each case based on the dry weight of the film.

12. The packaging film as claimed in one or more of claims 1 to 11, wherein it comprises a hydrophilic additive which is soluble in the spinning solution.

13. The packaging film as claimed in claim 12, wherein the hydrophilic additive is a homopolysaccharide or a derivative thereof, preferably starch, starch acetate, chitin, chitosan or pectin, a heteropolysaccharide or a derivative thereof, preferably carrageenan, xanthan, alginic acid or alginates, a toxicologically safe synthetic polymer or copolymer, preferably polyvinylpyrrolidone, polyvinyl alcohol or a polyethylene oxide.

14. The packaging film as claimed in claim 12 or 13, wherein the content of hydrophilic additive(s) is from 0.5 to 15 % by weight, preferably from 1 to 10 % by weight, in each case based on the dry weight of the film.

15. The packaging film as claimed in one or more of claims 1 to 14, wherein it comprises a primary plasticizer and/or a lubricant,

16. The packaging film as claimed in one or more of claims 1 to 15, wherein it has the form of a seamless tube.

17. The use of the packaging film as claimed in one or more of claims 1 to 16 as artificial sausage casing, preferably for small sausages, Bratwurst small sausages and small-caliber scalded-emulsion sausages and cooked-meat sausages.

## Revendications

1. Feuille d'emballage pour denrées alimentaires appropriée à la consommation simultanée, **caractérisée en ce qu'**elle contient de la cellulose, au moins une protéine et au moins une matière de charge, les matières de charge ayant une taille de particule inférieure à 100 µm et brisant la structure de la cellulose comme les protéines.

2. Feuille d'emballage suivant la revendication 1, **caractérisée en ce que** la cellulose présente un degré de polymérisation DP, déterminé suivant la méthode de Cuoxam, de 300 à 700 environ, de préférence de 400 à 650 environ.

3. Feuille d'emballage suivant la revendication 1 ou 2, **caractérisée en ce que** la proportion en cellulose est de 20 à 70% en poids, de préférence 30 à 65% en poids, rapportée dans chaque cas au poids à sec de la feuille.

4. Feuille d'emballage suivant l'une ou plusieurs des revendications 1 à 3, **caractérisée en ce que** la protéine est une protéine globulaire naturelle, de préférence de la caséine, de la protéine de soja, du gluten, de la céine, de l'ardéine ou de la protéine de pois.

5. Feuille d'emballage suivant l'une ou plusieurs des revendications 1 à 4, **caractérisée en ce que** la proportion d'au moins une protéine est de 5 à 10% en poids, de préférence 8 à 45% en, poids, rapportée dans chaque cas au poids à sec de la feuille.

6. Feuille d'emballage suivant l'une ou plusieurs des revendications 1 à 5, **caractérisée en ce que** la protéine est préréticulée.

7. Feuille d'emballage suivant la revendication 6, **caractérisée en ce que** la préréticulation de la protéine a lieu par réaction avec un aldéhyde, méthylol, époxyde, et/ou une enzyme.

8. Feuille d'emballage suivant la revendication 7, **caractérisée en ce que** la proportion en réticulant(s) est de 0,5 à 5% en poids, de préférence 1 à 3% en poids, rapportée dans chaque cas au poids de la protéine.

9. Feuille d'emballage suivant l'une ou plusieurs des revendications 1 à 8, **caractérisée en ce que** la matière de charge est une matière de charge organique, de préférence des argiles, des fibres naturelles broyées, des fibres courtes (linters) de coton, du chitosan, de la farine de noyaux de guar, de la farine de noyaux de caroube ou de la cellulose microcristalline.

10. Feuille d'emballage suivant l'une ou plusieurs des revendications 1 à 8, **caractérisée en ce que** la matière de charge est une matière de charge inorganique, de préférence du carbonate de calcium broyé ou du SiO₂ en poudre.

11. Feuille d'emballage suivant l'une ou plusieurs des revendications 1 à 10, **caractérisée en ce que** la proportion en matière(s) de charge est de 3 à 60% en poids, de préférence 4 à 50% en poids, rapportée dans chaque cas au poids à sec de la feuille.

12. Feuille d'emballage suivant l'une ou plusieurs des revendications 1 à 11, **caractérisée en ce qu'**elle contient un additif hydrophile qui est soluble dans la solution de filage.

13. Feuille d'emballage suivant la revendication 12, **caractérisée en ce que** l'additif hydrophile est un homopolysaccharide ou un dérivé de celui-ci, de préférence de l'amidon, de l'acétate d'amidon, de la chitine, du chitosan ou de la pectine, un hérétopolysaccharide ou un dérivé de celui-ci, de préférence un carragéénane, un xanthane, de l'acide alginique ou des alginates, un polymère ou un copolymère synthétique sans problème sur le plan toxicologique, de préférence une polyvinylpirrolidone, un alcool polyvinylique ou un oxyde polyéthylénique.

14. Feuille d'emballage suivant les revendications 12 ou 13, **caractérisée en ce que** la proportion en additif(s) hydrophile(s) est de 0,5 à 15% en poids, de préférence 1 à 10% en poids, rapportée dans chaque cas au poids à sec de la feuille.

15. Feuille d'emballage suivant l'une ou plusieurs des revendications 1 à 14, **caractérisée en ce qu'**elle contient un plastifiant primaire et/ou un lubrifiant.

16. Feuille d'emballage suivant l'une ou plusieurs des revendications 1 à 15, **caractérisée en ce qu'**elle a la forme d'un tuyau flexible sans soudure.

17. Utilisation de la feuille d'emballage suivant l'une ou plusieurs des revendications 1 à 16 en tant qu'enveloppe artificielle pour saucisses, de préférence pour des petites saucisses, des petites saucisses à rôtir et des saucisses à bouillir et à cuire de petit calibre.
